# EUROPEAN PATENT APPLICATION

(11) **EP 0 985 506 A1**
(43) Date of publication of application: **15.03.2000**
(21) Application number: 98115319.0
(22) Date of filing: 14.08.1998
(51) Int. Cl.: B29C 33/30, B29C 33/44

(54) **Moulding apparatus for plastic material products**

(71) Applicant: DETROY HOLDINGS LIMITED, Dublin 2 (IE)
(72) Inventor: Raoult, Mari Gaud, F-35800 Dinard (FR)
(74) Representative: Sutto, Luca

(57) **Abstract**

An apparatus has been realised for moulding products made of plastic material presenting two moulds (5) defined by a pre-set number of elements (6) able to be moved relative to each other between a first operative condition, wherein they define a chamber shaped counter to the product to be manufactured and a second operative condition, wherein the extraction of the moulded product (P) is allowed. Each element (6) comprises a support block (8) and a shaping portion (9) removably engaged to the respective block and destined, in co-operation with shaping portions of the other elements, to define the moulding chamber of the product.

## Description

The present invention relates to an apparatus for moulding products made of plastic material.

In particular the subject apparatus is particularly useful for the realisation by moulding of products whose shape is a revolution body possibly provided with an axial cavity.

As is well known, for the realisation of pieces by moulding, for instance by pouring appropriate resins in the liquid state, moulds are used which define a chamber shaped counter to the product to be obtained.

More in detail, if a cast moulding technology is used as mentioned above, the resin is inserted in the desired quantity within the chamber defined by the mould which is subsequently closed to allow the polymerisation of the resin and thus its expansion within the mould. Afterwards, normally after the piece is extracted, the mould is cleaned and detaching compounds are deposited therein, whereupon it reaches a new resin filling station and the cycle briefly described above is repeated.

All the operations mentioned above are currently performed through the use of apparatuses able simultaneously to move a plurality of moulds.

More specifically it is possible to employ apparatuses having the structure of a carousel and presenting in angularly offset radial positions the moulds whereinto the resin is to be inserted.

Each of the moulds is provided with respective equipment to allow to perform all the necessary operative phases.

It should be noted that, in practice, for each product to be used on the carousel apparatus is therefore present a plurality of moulds each bearing the respective mechanisms for opening-closing, extraction etcetera.

For each of the moulds present on the carousel, if a replacement operation is needed, it is necessary to remove from the carousel itself also the corresponding mechanisms for opening-closing, extraction etcetera.

In other apparatuses, destined to realise artefacts with a simple structure (typically, soles for shoes), the figure to be moulded is defined by two semi-parts, whereof at least one is movable, integrated with the respective supports.

In essence, when multiple artefacts with differentiated shapes are to be moulded, the operator must necessarily replace from the carousel the moulds for realising one artefact with those for realising the next artefact.

The replacement of the moulds entails the replacement not just of the figures defining the shape of the piece to be moulded, but also the replacement of the support blocks of these figures, as well as - at times - the replacement of the apparatuses for controlling and driving the various parts of the mould as well as of all the auxiliary organs normally associated to each mould.

Additionally, it should be noted that given the complexity of the carousel apparatus wherein normally numerous moulds and numerous corresponding control devices are present, oftentimes some operations such as the extraction or the control of certain operative phases need to be performed manually employing operators necessarily assigned to these tasks.

In other words, current structures for moulding components made of plastic material, particularly if their geometries are relatively complex, though they have reached a high level of automation, present poor operating flexibility when differentiated pieces are to be produced, requiring laborious operations to replace essentially the entire mould and all the components associated thereto.

As mentioned above, moreover, in spite of the industrialisation of the processes which has taken place in recent years, to this day some phases of moulding production operations are not fully automated.

Lastly, it should be noted that once a piece has been realised and the mould is opened the latter no longer guarantees a precise positioning of the piece itself or the possibility of performing generally thereon additional manipulation and surface finishing operations which are often necessary for the definitive completion of the product.

In this situation the fundamental aim of the present invention is to offer an apparatus for moulding products made of plastic material able essentially to overcome all the technical limitations demonstrated by traditional apparatuses.

Within said technical task; a fundamental object of the invention is to offer an apparatus for moulding products made of plastic material which is extremely flexible operationally even when there is a need to realise products with differentiated shapes.

A further important aim of the invention is to make available an apparatus that allows substantially to automate all operations necessary for moulding, extracting and moving the product.

No less important an aim of the invention is to provide an apparatus that allows to define a precise positioning of the moulded product and that also allows the product itself to be easily gripped and manipulated by tools destined to perform further surface finishing operations subsequent to moulding.

These and other aims besides which will be made more evident in the course of the present description are essentially attained by an apparatus for moulding products made of plastic material according to what is described in the accompanying claims.

Additional features and advantages shall become more readily apparent in the detailed description of a preferred, but not exclusive, embodiment of an apparatus according to the invention.

The description shall be made hereafter with reference to the accompanying drawings, provided solely by way of non limiting example wherein:
- Fig. 1 is a perspective view of an apparatus according to the invention in correspondence with a first operative condition;
- Fig 2 is a perspective view of an upper portion of the apparatus in Fig. 1 in the course of an operative phase wherein the moulds present in the apparatus according to the invention are open;
- Figs. 3 and 4 show, also in perspective view, the apparatus as per the previous figures in subsequent operative phase wherein the moulds present in the apparatus itself are open;
- Fig. 5 shows a cross section of a mould associated with the subject apparatus in correspondence with an operative condition of closure.

With reference to the accompanying drawings, the reference number 1 indicates in its entirety an apparatus for moulding products made of plastic material according to the present invention.

The subject apparatus is suitable to be used to manufacture products of any shape, although it is particularly suited to the manufacture of items having revolution body geometry, possibly provided with one or more axial through holes.

In the instance illustrated in detail hereafter, the subject apparatus is used to manufacture a tubular body whose radially external walls may or may not present shapings depending on design requirements.

The apparatus 1 comprises a support structure 2 constituted in this case by a base 3 and by a fixed frame stably mounted on the base 3 and indicated in the accompanying drawings with the reference number 4.

Above the base 3 is operatively engaged to the fixed frame 4 a pair of identical moulds 5, each defined by a pre-set number of elements 6 which can be moved with respect to each other between a first operative condition, wherein the elements are mutually approached to define a chamber shaped counter to the product to be manufactured, and at least a second operative condition, wherein the elements are moved away from each other to allow the extraction of the moulded product.

In greater detail, it should be noted that each of the moulds 5 comprises an upper element 6a, a lower element 6b opposite to the upper element and distanced therefrom, as well as a pair of lateral elements 6c and 6d able to be mutually approached and operating in the space defined between the upper element and the lower element.

It should be noted that to allow driving the elements 6 between the first and the second operative condition, driving means are provided which are also borne by the base 3 and which are active on the elements 6.

The driving means are globally indicated with the number 7 and shall be described in detail in the remainder of the present description.

Advantageously, each of the elements 6 comprises a support block 8 connected kinematically to the driving means and a shaping portion 9 destined, in co-operation with shaping portions of the other elements, to define the moulding chamber of the product to be realised, also advantageously each shaping portion of each of the elements 6 is removably engaged to the respective element in such a manner as to be replaceable with other shaping portions.

The coupling between shaping portion and corresponding support block can be obtained with bayonet, screw-nut screw, dovetail engagement, etcetera.

This replacement operation is performed in case of damage to the shaping portion or more typically if it is necessary to produce pieces made of plastic material with differentiated shapes.

In particular it should be noted that the upper element 6 of each mould 5 comprises an upper shaping portion 9a destined to define essentially an upper area of the product to be moulded "p".

In turn, the lower element 6b comprises a respective lower shaping portion 9b destined to define at least one lower area of the product to be moulded "p".

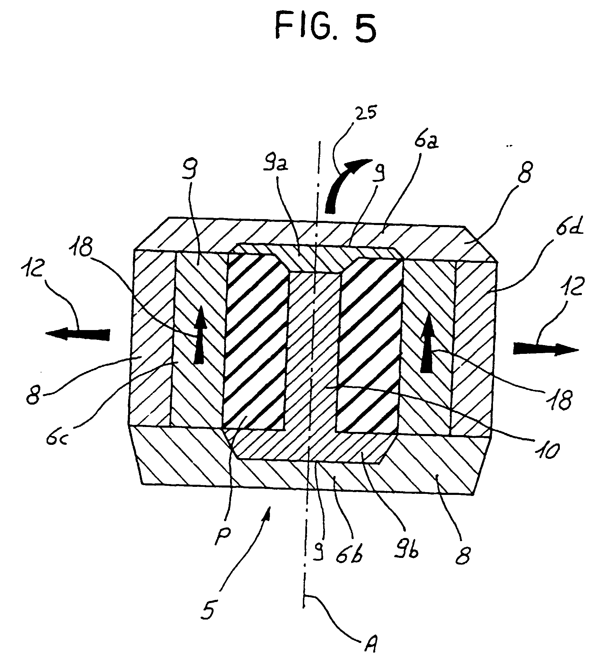

Descending into further detail and with particular reference to Fig. 5 one notes that, if the product "p" presents a through axial opening, the lower element 6b of the mould 5 can comprise a core with essentially vertical development set to define said axial cavity in the piece.

Fig 5 shows schematically by way of example a mould destined to the realisation of a product with tubular shape whose axial cavity is defined by the core 10 associated to the lower shaping portion 9b of the lower element 6b.

Describing now in detail the structure of the driving means 7, it should be noted that the latter comprise a first driving organ 11 active on the lateral elements 6c, 6d, of the mould 5 to determine a translation of such lateral elements towards and away from each other according to a direction transverse to a vertical axis "A" of the product to be moulded (see Fig. 5).

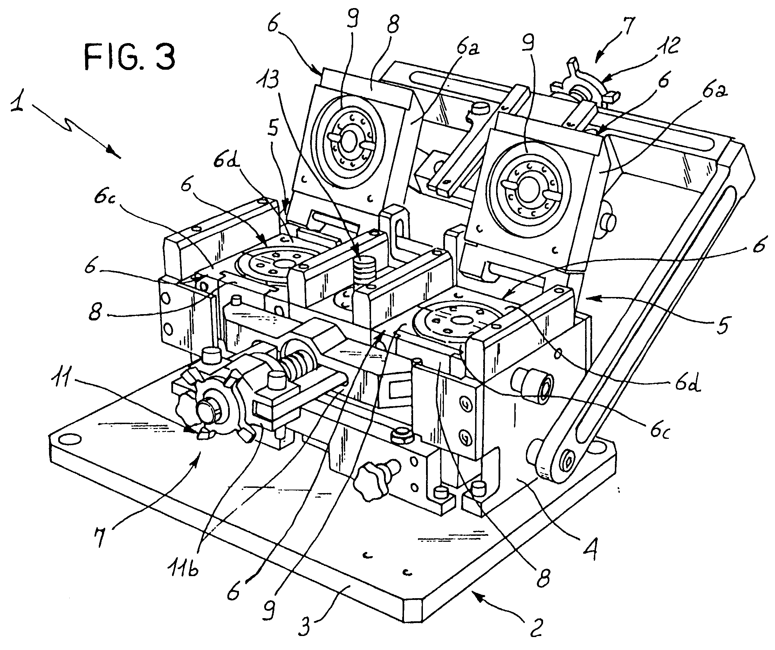

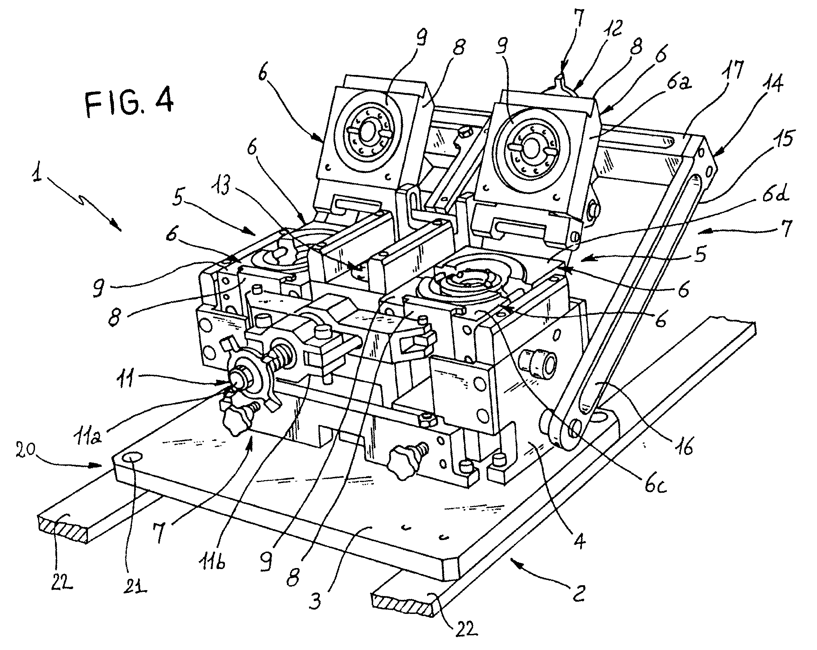

The movement imparted by the first driving organ 11 is schematically shown by the arrows 12 of Fig. 5 and it is also clearly visible by comparing Figs. 3 and 4.

It should be noted that the first driving organ presents an active portion 11a which can be driven by an external actuator (for instance hydraulic, pneumatic, electrical or of other types besides, not shown in the accompanying figures) to determine the translation according to said direction transverse to the vertical axis "A" of the lateral elements 6c and 6d.

Preferably the first driving organ is of the worm screw type so that, through a rotation imparted to the active portion 11a, a consequent rotation is obtained of the worm screw which, acting through a fly press system 11b, commands the simultaneous translating motion of the support blocks 8 of the aforementioned lateral elements 6c, 6d.

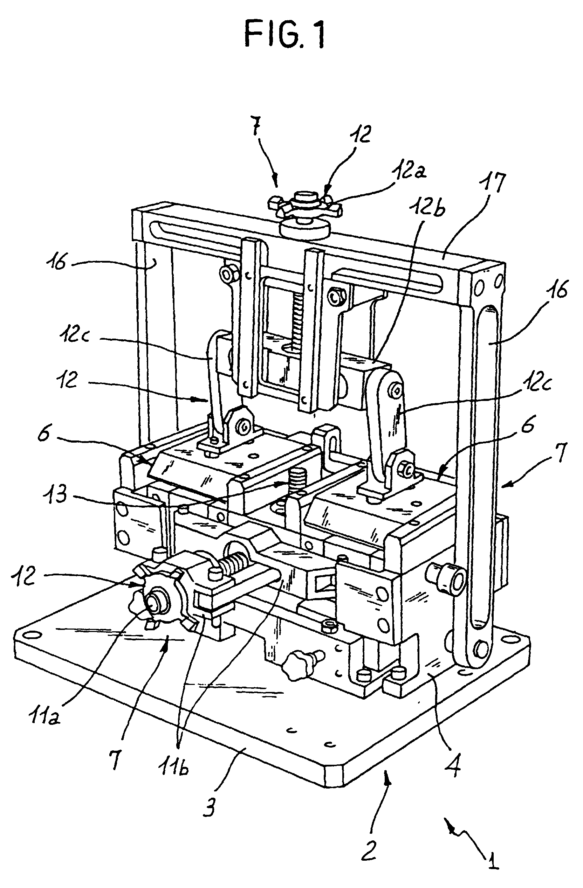

The driving means 7 further comprise a second driving organ 12 active on the upper element 6a of each mould 5 to move the latter oscillatorily between a condition of approach to the lateral elements (shown in Fig. 1) and a condition of angular distancing from said lateral elements (see Figs. 3 and 4).

The second driving organ is also of the worm screw type and it comprises an active portion 12a able to be controlled by an external actuator (not shown and, for example, pneumatic, hydraulic, electrical or of other types besides) which may initiate the rotation of the worm screw and, through a fly press mechanism 12b, actuate levers 12c in turn active on the support blocks 8 of the upper elements 6a.

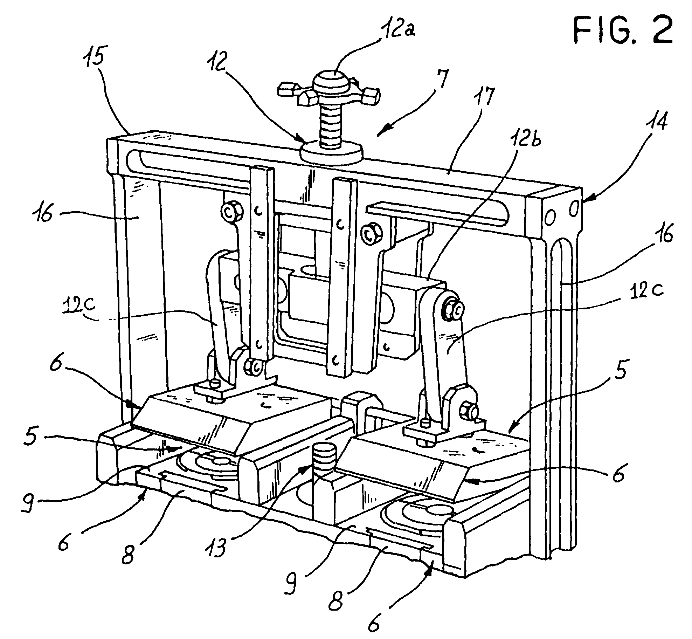

The motion imparted by the second driving organ 12 can be seen comparing Figures 2 and 3 and it is schematically indicated by arrow 25 in Fig. 5.

Lastly, the driving means 7 comprise a third driving organ 13 active on the lateral elements 6c, 6d to drive the latter parallel to a vertical axis "A" of the product to be moulded moving the lateral elements themselves away from the lower element.

In the case shown this motion indicated with the arrows 18 in Fig 5 occurs upwards and allows the partial extraction of the product from the core 10.

The third driving organ 13 also comprises an active portion (not shown) connectable to an external actuator and it is also preferably of the worm screw type.

Also with reference to the driving means it should be noted that the second driving organ 12 is able to perform a rotation of the upper element 6a from an essentially horizontal position to a position rotated by an angle exceeding 90( with respect to the horizontal position and vice versa (see Figs. 3 and 4) thereby allowing easier access towards the moulded piece by manipulation and/or surface finishing apparatuses.

Also provided are stopping means 14 associated to the driving means 7 comprising essentially a "C" shaped element 15 having uprights 16 in revolving engagement to the frame 4 according to an essentially horizontal axis of rotation and a cross piece 17 supporting the second driving organ 12.

In the condition of closure of the mould, the stopping means, i.e. the "C" shaped bar is in an essentially vertical position (Fig. 1).

In this condition wherein the upper elements are in a closed condition the "C" shaped element cannot be displaced angularly without previously operating the second driving organ 12 thereby determining at least a partial opening of the upper elements 6a (see Fig. 2).

Only once a pre-set angular condition of the upper elements 6a is reached, will it be possible to act by thrusting (for instance through an actuator external to the subject apparatus) on the cross piece 17 and thereby to rotate angularly the "C" shaped bar determining the complete opening of the upper elements 6a of each mould (see Fig. 3).

From the structural point of view it should lastly be noted that the base 3 of the subject apparatus is also provided with centring and engagement means 20, for example comprising centring pins or slots 21 destined to be coupled with longitudinal bars 22 for guiding the apparatus itself along a pre-set working path (see Fig. 4).

It should be noted that, since the apparatus shall have to co-operate with external actuator organs able to activate the driving means 7, the apparatus 1 shall typically move into different working stations in correspondence with each of which one or more of the actuators tasked with driving the first organ 11, the second organ 12, the third organ 13 or the "C" shaped bar 14 shall intervene.

The invention attains important advantages.

Primarily thanks to the presence of moulds constituted by different elements able to be mutually coupled, each provided with respective shaping portions able to be disengaged from the support body, it is possible to realise a wide range of products with different shapes (provided they have comparable overall dimensions) simply through the replacement of the shaping portions 9 associated to the movable elements.

In other words, thanks to the subject apparatus the only elements to be replaced to realise different products are the shaping portions, whereas both the support structure 2 and the blocks 8 along with the means 7 for driving the various movable parts remain unchanged.

This is clearly economical both because once the apparatus 1 is realised the investments required to produce pieces of different types are certainly lower than those required by the state of the art, and because the very operations which the assigned workers must perform to modify a mould in order to modify product types are certainly minimised.

It should also be noted that since the apparatus 1 provides for the use of a mould divided essentially into 4 movable parts with respective driving means, said apparatus can be placed on a standard working line which once designed for one product may easily be programmed to operate on any other product that can be manufactured with the apparatus 1.

Also the external actuators which are to intervene on the driving means 7 shall be designed a priori knowing that the axes of intervention are solely those defined by the first, by the second, and by the third driving organ 11, 12, 13 with the possible addition of an axis for controlling the stopping means 14.

The apparatus is also extremely advantageous because once the support structure 2 is precisely positioned on a pre-set working line, the very positioning of the moulded pieces shall be perfectly defined from the beginning to the end of the work process.

Moreover, thanks to the structure with elements able to be moved relative to each mould, the moulded product "p", once the moulding phase is complete, may be placed in a condition of utmost accessibility for manipulation or surface finishing means (see Fig. 4).

In other words, the apparatus according to the invention has essentially solved all the drawbacks and limitations of the prior art offering an operating flexibility, a repeatability of production even on different products and a reliability certainly never reached heretofore.

## Claims

1. Moulding apparatus for plastic material products comprising:
- a support structure (2);
- at least one mould (5) defined by a pre-set number of elements (6) moveable relative to each other between a first operative condition, wherein said elements approach each other to define a chamber shaped counter to the product to be realised and at least a second operative condition, wherein the elements are moved away from each other to allow the extraction of the moulded product (P);
- driving means (7) active on the elements (6) to move the latter between said first and said second operative condition, characterised in that each of said elements (6) comprises a support block (8) connected kinematically to the driving means (7) and a shaping portion (9) destined, in co-operation with shaping portions of the other elements, to define said chamber, each shaping portion (9) being removably engaged to the respective element (6).

2. Apparatus according to claim 1, characterised in that each of said elements (6) comprises an upper element (6a), a lower element (6b) opposed to said upper element (6a) and distanced there from and a pair of lateral elements (6c, 6d) able to be mutually approached and interposed between said upper element (6a) and said lower element (6b).

3. Apparatus according to claim 2, characterised in that the upper element (6a) comprises an upper shaping portion destined essentially to define an upper area of the product (P) to be moulded.

4. Apparatus according to claim 3, characterised in that the lower element (6b) comprises a lower shaping portion destined to define at least a lower area of the product (P) to be moulded.

5. Apparatus according to claim 4, characterised in that the lower shaping portion of the lower element (6b) can comprise a core (10) with essentially vertical development set to define a corresponding axial cavity in the product (P) to be manufactured.

6. Apparatus according to claim 4, characterised in that said driving means (7) comprise a first driving organ (11) active on the lateral elements (6c, 6d) to determine a translation thereof towards or away from each other according to a direction transverse to a vertical axis (A) of the product to be moulded (P).

7. Apparatus according to claim 4, characterised in that said driving means (7) comprise a second driving organ (12) active on the upper element (6a) to move the latter oscillatorily between a condition of approach to said lateral elements (6c and 6d) and a condition of angular distancing from said lateral elements.

8. Apparatus according to claim 4, characterised in that said driving means (7) comprise a third driving organ (13) active on said lateral elements (6c, 6d) to drive the later parallel to a vertical axis (A) of the product to be moulded moving the lateral elements themselves away from said lower element (6b).

9. Apparatus according to claim 7, characterised in that said upper element (6a) is in essentially horizontal position, in correspondence with the condition of approach to the lateral elements (6c, 6d), and in a position rotated by an angle exceeding 90( with respect to said horizontal position, in correspondence with said condition of angular distancing.

10. Apparatus according to claim 1, characterised in that it comprises a pair of identical moulds (5) set mutually side by side, said driving means (7) being active simultaneously on both moulds (5) to translate the elements defining each mould between the respective first operative condition and the respective second operative condition.

11. Apparatus according to claim 6, characterised in that the first driving organ (11) comprises an active portion (11a) connectable to an external actuator to determine the translation according to said direction transverse to the vertical axis (a) of the product to be manufactured.

12. Apparatus according to claim 11, characterised in that the first driving organ (11) is of the worm screw type.

13. Apparatus according to claim 7, characterised in that the second driving organ (12) comprises an active portion (12a) connectable to an external actuator to determine said oscillation.

14. Apparatus according to claim 13, characterised in that the second driving organ (12) is of the worm screw type.

15. Apparatus according to claim 8, characterised in that said third driving organ (13) comprises an active portion connectable to an external actuator, said third organ being preferably of the worm screw type.

16. Apparatus according to any one of the previous claims, characterised in that it comprises stopping means (15) to lock kinematically said elements (6) in correspondence with a first operative condition wherein they define the moulding chamber.

17. Apparatus according to claim 1, characterised in that said support structure (2) comprises at least one base (3) provided with means for centring and engaging to longitudinal bars for guiding the apparatus along a pre-set working path.
